# EUROPEAN PATENT SPECIFICATION

(11) **EP 2 413 170 B1**
(45) Date of publication and mention of the grant of the patent: **13.02.2013**
(21) Application number: 10007829.4
(22) Date of filing: 28.07.2010
(51) Int. Cl.: G02B 6/125, H04Q 11/00

(54) **Optical device**
Optische Vorrichtung
Dispositif optique

(43) Date of publication of application: 01.02.2012
(73) Proprietor: u2t Photonics AG, 10553 Berlin (DE)
(72) Inventor: Matiss, Andreas, Dr., 10713 Berlin (DE); Trommer, Dirk, 10717 Berlin (DE)
(74) Representative: Fischer, Uwe

(56) References cited:
- EP-A1- 0 282 268
- EP-A1- 1 777 561
- WO-A1-01/09654
- JP-A- 2000 221 350
- US-A1- 2005 013 528
- CHEN J C ET AL: "Waveguide grating routers with greater channel uniformity", ELECTRONICS LETTERS, IEE STEVENAGE, GB, vol. 33, no. 23, 6 November 1997 (1997-11-06), pages 1951-1952, XP006008157, ISSN: 0013-5194, DOI: DOI:10.1049/EL:19971311

## Description

The invention relates to an optical device comprising a coupler and a connection network.

### Background of the invention

Publication "Athermal InP-Based 90°-Hybrid Rx OETCs with pin-PDs >60Ghz for Coherent DP-QPSK Photoreceivers" (R. Kunkel, H.-G. Bach, D. Hoffmann, G.G. Mekonnen, R. Zhang, D. Schmidt and M. Schell, IPRM 2010, 22nd International Conference on Indium Phosphide and Related Materials, May 31 - June 4, 2010, Takamatsu Symbol Tower, Kagawa, Japan) discloses an optical device having the features of the preamble of claim 1. The device comprises a coupler having coupler inputs and coupler outputs, and a connection network. The connection network comprises connecting waveguides which connect the coupler outputs with outputs of the connection network. One of the waveguides of the connection network crosses two other waveguides while those other waveguides have just one crossing.

Further connection networks are described in European Patent Application EP 1 777 561, and in the international Patent Application WO 01/09654 A1.

European Patent Application EP 0 282 268 A1 discloses an optical device comprising the features of the preamble of claim 1.

Devices like those described in the cited publication require low-loss crossings in order to achieve sufficiently low imbalances within the output waveguides of the connection network. To this end, the mentioned publication proposes a precise technological fabrication process.

However, the precision required for achieving sufficiently lcw imbalances, is very hard to achieve in mass production.

### Objective of the present invention

An objective of the present invention is to provide a device which requires less fabrication accuracy than prior art devices, but nonetheless reaches low imbalances.

A further objective of the present invention is to provide a device which can be fabricated at lower costs than prior art devices but show a comparable optical behaviour.

### Brief summary of the invention

An embodiment of the invention relates to an optical device comprising a coupler having coupler inputs and coupler outputs, and a connection network, wherein said connection network comprises connecting waveguides which connect said coupler outputs with outputs of the connection network, and wherein at least one connecting waveguide of the connection network crosses at least one other connecting waveguide of the connection network, wherein at least one connecting waveguide, which crosses other connecting waveguides less often than the connecting waveguide with the maximum number of crossings with other connecting waveguides, is attenuated by an optical attenuation element, said optical attenuation element comprises a dummy waveguide which crosses the at least one connecting waveguide, characterized in that said coupler comprises four coupler outputs and said connection network comprises four connecting waveguides, each connecting waveguide connecting one of the coupler outputs with a corresponding output of the connection network and wherein a first connecting waveguide crosses a second and a third connecting waveguides each once, and a fourth connecting waveguide is free of any crossing with any other connecting waveguide and wherein the fourth connecting waveguide is attenuated by a first dummy waveguide and second dummy waveguide, the first dummy waveguide crossing the fourth connecting waveguide under the same angle as the first connecting waveguide crosses the second waveguide, and the second dummy waveguide crossing the fourth connecting waveguide under the same angle as the first connecting waveguide crosses the third connecting waveguide, and wherein the waveguide width of the dummy waveguides corresponds to the waveguide width of the connecting waveguides.

In this manner, the optical attenuation elements may be fabricated together with the connecting waveguides without further effort. Thus, additional costs for the fabrication of the optical attenuation element may be completely avoided.

The dummy waveguide may have unconnected ends which are separate from the coupler outputs and the outputs of the connection network. As such, the optical influence of the dummy waveguides may be restricted to the attenuation of the assigned waveguide.

Further, all connecting waveguides, which cross other connecting waveguides less often than the connecting waveguide with the maximum number of crossings with other connecting waveguides, are preferably each connected to at least one optical attenuation element.

Furthermore, all connecting waveguides, which cross other connecting waveguides less often than the connecting waveguide with the maximum number of crossings, are preferably each connected to a specific number of optical attenuation elements, wherein said specific number corresponds to the difference between said maximum number and the number of waveguide crossings of the respective connecting waveguide.

Preferably a dummy waveguide crosses the second connecting waveguide under the same angle as the first connecting waveguide crosses the third waveguide. A further dummy waveguide may cross the third connecting waveguide under the same angle as the first connecting waveguide crosses the second waveguide.

The coupler may have two inputs and four outputs wherein signals leaving the outputs have phase differences between each other of 90° or multiple thereof. For instance, the coupler may be a multimode interference coupler.

The device may further comprise four photodetectors and two differential amplifiers, each of the amplifiers being connected to two photodetectors, wherein each photodetector is connected to one of the outputs of the connection network.

### Brief description of the drawings

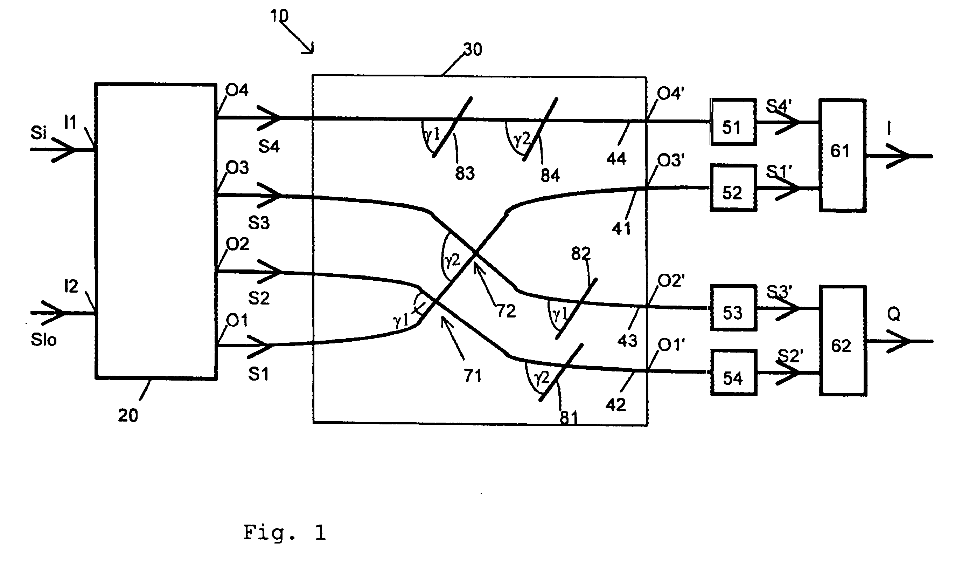

In order that the manner in which the above-recited and other advantages of the invention are obtained will be readily understood, a more particular description of the invention briefly described above will be rendered by reference to a specific embodiment thereof which is illustrated in the appended drawing. Understanding that this drawing depicts only a typical embodiment of the invention and is therefore not to be considered to be limiting of its scope, the invention will be described and explained with additional specificity and detail by the use of the accompanying drawing in which
- Figure 1: shows a first exemplary embodiment of an inventive device.

### Detailed description of the preferred embodiment

The preferred embodiment of the present invention will be best understood by reference to the drawing, wherein identical or comparable parts are designated by the same reference signs throughout.

It will be readily understood that the present invention, as generally described and illustrated in the figure herein, could vary in a wide range. Thus, the following more detailed description of the exemplary embodiment of the present invention, as represented in Figures 1, is not intended to limit the scope of the invention, as claimed, but is merely representative of a presently preferred embodiment of the invention.

Figure 1 shows a first embodiment of a device 10 according to the invention. The device 10 comprises a multimode waveguide coupler 20 which forms a six-port 90°optical hybrid device. Instead of a multimode waveguide coupler, any other type of coupler may be incorporated into device 10, such as other types of 90°-hybrids or other types of couplers, for instance couplers based on internal 3dB-splitters and internal phase shifters.

The waveguide coupler 20 has two optical inputs I1 and I2 and four optical outputs O1, 02, 03 and 04.

Inputs I1 and I2 may be used to enter a QPSK-modulated signal Si and a local oscillator signal Slo into the coupler 20.

The optical signals S1-S4, which leave the coupler outputs O1-O4, have phase differences between each other of 90° or multiple thereof. Supposing that signal S1, which leaves output O1, has a phase of 180°, signals S2, S3 and S4, which leave outputs O2, O3 and O4, will have phases of 270°, 90°, and 0°, respectively.

The multimode coupler 20 is connected to a connection network 30 which comprises four connecting waveguides 41, 42, 43 and 44. These waveguides connect the coupler outputs O1, O2, O3 and 04 with outputs O1', O2', O3', and O4' of the connection network 30.

The outputs O1', O2', O3', and O4' of the connection network 30 are connected to photodiodes 51-54 which absorb the electromagnetic signals S1-S4 transmitted by waveguides 41, 42, 43 and 44, respectively, and generate electrical signals S1'-S4'. Two differential amplifiers 61 and 62 that are each connected to two of the photodiodes 51-54, generate demodulated electrical QPSK signals I and Q.

As can be seen in Figure 1, the first connecting waveguide 41 crosses the second waveguide 42 at a first crossing 71, and the third waveguide 43 at a second crossing 72. As such, if the fabrication process is not perfect, signal S1 that is transmitted via the first connecting waveguide 41, will suffer additional attenuation compared to signals S2-S4 in the other waveguides as the latter have to pass just one crossing (signals S2 and S3) or no crossing at all (signal S4). Thus, the signal amplitudes at the outputs O1', 02', 03', and O4' may slightly differ.

In order to address this problem, waveguides 42, 43, and 44 are in direct or indirect contact with optical attenuation elements. In the embodiment shown in Figure 1, the optical attenuation elements are dummy waveguides 81-84 which cross the assigned connecting waveguide each under a predetermined angle γ1 or γ2 and thus cause additional attenuation.

The waveguide width of the dummy waveguides 81-84 preferably corresponds to the waveguide width of the connecting waveguides 41-44.

The dummy waveguide 81 that attenuates the second connecting waveguide 42, crosses the second waveguide 42 under the same angle γ2 as the first connecting waveguide 41 crosses the third connecting waveguide 43 at the second crossing 72. As such, the additional loss caused by dummy waveguide 81 corresponds to the additional loss caused by the second crossing 72, and the signal strength of signal S2 will better match with the signal strength of signal S1.

The dummy waveguide 82 that attenuates the third connecting waveguide 43, crosses the third waveguide 43 under the same angle γ1 as the first connecting waveguide 41 crosses the second connecting waveguide 42 at the first crossing 71. As such, the additional loss caused by dummy waveguide 82 corresponds to the additional loss caused by the first crossing 71, and the signal strength of signal S3 will better match with the signal strength of signal S1.

The fourth waveguide 44 is attenuated by a first dummy waveguide 83 and a second dummy waveguide 84. The first dummy waveguide 83 crosses the fourth connecting waveguide 44 under the same angle γ1 as the first connecting waveguide 41 crosses the second waveguide 42 at the first crossing 71, and the second dummy waveguide 84 crosses the fourth connecting waveguide 44 under the same angle γ2 as the first connecting waveguide 41 crosses the third waveguide 43 at the second crossing 72. As such, the additional losses caused by dummy waveguides 83 and 84 correspond to the additional losses caused by the first and second crossings 71 and 72, and the signal strength of signal S4 will better match with the signal strength of signal S1.

As apparent from the above, dummy waveguides 81-84 add additional optical losses to waveguides 42-44 which cross other waveguides less often than waveguide 41.

### Reference signs

- 10: device
- 20: optical coupler
- 30: connection network
- 41-44: connecting waveguide
- 51-54: photodiode
- 61-62: differential amplifier
- 71: first crossing
- 72: second crossing
- 81-84: dummy waveguide
- I1, 12: optical input
- I, Q: demodulated electrical QPSK signal
- O1-O4: optical output
- O1'-O4': outputs of the connection network
- S1-S4: electromagnetic signal
- S1'-S4': electrical signal
- Si: QPSK-modulated signal
- Slo: local oscillator signal
- γ1, γ2: angle of waveguide crossing

## Claims

1. Optical device (10) comprising a coupler (20) having coupler inputs (I1, I2) and coupler outputs (O1-O4), and a connection network (30),
- wherein said connection network (30) comprises connecting waveguides (41-44) which connect said coupler outputs (O1-O4) with outputs of the connection network (O1'-O4')
- wherein at least one connecting waveguide of the connection network crosses at least one other connecting waveguide of the connection network,
- wherein at least one connecting waveguide (42-44), which crosses other connecting waveguides less often than the connecting waveguide (41) with the maximum number of crossings with other connecting waveguides, is attenuated by an optical attenuation element,
said optical attenuation element comprises a dummy waveguide (81-84) which crosses the at least one connecting waveguide,
**characterized in that**
- said coupler (20) comprises four coupler outputs and said connection network (30) comprises four connecting waveguides, each connecting waveguide connecting one of the coupler outputs with a corresponding output of the connection network,
- wherein first connecting waveguide (41) crosses a second and a third connecting waveguides (42, 43) each once, and a fourth connecting waveguide (44) is free of any crossing with any other connecting waveguide,
- wherein the fourth connecting waveguide is attenuated by a first dummy waveguide (83) and a second dummy waveguide (84), the first dummy waveguide (83) crossing the fourth connecting waveguide (44) under the same angle as the first connecting waveguide (41) crosses the second waveguide (42), and the second dummy waveguide (84) crossing the fourth connecting waveguide (44) under the same angle as the first connecting waveguide (41) crosses the third connecting waveguide (43), and
- wherein the waveguide width of the dummy waveguides corresponds to the waveguide width of the connecting waveguides.

2. Optical device according to claim 1,
**characterized in that**
said dummy waveguides have unconnected ends which are separate from the coupler outputs (O1-O4) and the outputs (O1'-O4') of the connection network

3. Optical device according to any of the preceding claims,
**characterized in that**
all connecting waveguides, which cross other connecting waveguides less often than the connecting waveguide with the maximum number of crossings with other connecting waveguides, are each attenuated by at least one optical attenuation element.

4. Optical device according to claim 3,
**characterized in that**
- all connecting waveguides, which cross other connecting waveguides less often than the connecting waveguide with the maximum number of crossings, are each attenuated by a specific number of optical attenuation elements,
- wherein said specific number corresponds to the difference between said maximum number and the number of waveguide crossings of the respective connecting waveguide.

5. Optical device according to claim 4,
**characterized in that**
an optical attenuation element, which attenuates the second connecting waveguide (42), is a dummy waveguide (81), which crosses the second connecting waveguide under the same angle as the first connecting waveguide (41) crosses the third waveguide (43).

6. Optical device according to any of the preceding claims 4 - 5,
**characterized in that**
an optical attenuation element, which attenuates the third connecting waveguide (43), is a dummy waveguide (82) which crosses the third connecting waveguide under the same angle as the first connecting waveguide (41) crosses the second waveguide (42).

7. Optical device according to any of the preceding claims,
**characterized in that**
the coupler (20) has two inputs and four outputs wherein signals leaving the outputs have phase differences between each other of 90° or multiple thereof.

8. Optical device according to any of the preceding claims,
**characterized in that**
the coupler is a multimode interference coupler.

9. Optical device according to any of the preceding claims,
**characterized in that**
- the device further comprises four photodetectors (51-54) and two differential amplifiers (61, 62), each of the amplifiers being connected to two photodetectors,
- wherein each photodetector is connected to one of the outputs of the connection network (30).

## Patentansprüche

1. Optische Vorrichtung (10), umfassend einen Koppler (20) mit Kopplereingängen (I1, 12) und Kopplerausgängen (O1-O4) und einem Verbindungsnetz (30),
- wobei das Verbindungsnetz (30) Verbindungswellenleiter (41-44) umfasst, die die Kopplerausgänge (O1-O4) mit Ausgängen des Verbindungsnetzes (O1'-04') verbinden,
- wobei mindestens ein Verbindungswellenleiter des Verbindungsnetzes mindestens einen weiteren Verbindungswellenleiter des Verbindungsnetzes überquert,
- wobei mindestens ein Verbindungswellenleiter (42-44), der andere Verbindungswellenleiter seltener als der Verbindungswellenleiter (41) mit der Höchstzahl von Überquerungen von anderen Verbindungswellenleitern überquert, durch ein optisches Dämpfungselement gedämpft wird, das optische Dämpfungselement einen Scheinwellenleiter (81-84) umfasst, der den mindestens einen Verbindungswellenleiter überquert,
**dadurch gekennzeichnet, dass**
- der Koppler (20) vier Kopplerausgänge umfasst und das Verbindungsnetz (30) vier Verbindungswellenleiter umfasst, wobei jeder Verbindungswellenleiter einen der Kopplerausgänge mit einem entsprechenden Ausgang des Verbindungsnetzes verbindet,
- wobei ein erster Verbindungswellenleiter (41) einen zweiten und einen dritten Verbindungswellenleiter (42, 43) jeweils einmal überquert und ein vierter Verbindungswellenleiter (44) von jeglicher Überquerung mit jeglichen anderen Verbindungswellenleitern frei ist,
- wobei der vierte Verbindungswellenleiter durch einen ersten Scheinwellenleiter (83) und einen zweiten Scheinwellenleiter (84) gedämpft wird, wobei der erste Scheinwellenleiter (83) den vierten Verbindungswellenleiter (44) unter demselben Winkel überquert, wie der erste Verbindungswellenleiter (41) den zweiten Wellenleiter (42) überquert, und der zweite Scheinwellenleiter (84) den vierten Verbindungswellenleiter (44) unter demselben Winkel überquert, wie der erste Verbindungswellenleiter (41) den dritten Verbindungswellenleiter (43) überquert, und
- wobei die Wellenleiterbreite der Scheinwellenleiter der Wellenleiterbreite der Verbindungswellenleiter entspricht.

2. Optische Vorrichtung nach Anspruch 1, **dadurch gekennzeichnet, dass**
die Scheinwellenleiter unverbundene Enden aufweisen, die von den Kopplerausgängen (O1-O4) und den Ausgängen (O1'-O4') des Verbindungsnetzes getrennt sind.

3. Optische Vorrichtung nach einem beliebigen der vorhergehenden Ansprüche,
**dadurch gekennzeichnet, dass**
alle Verbindungswellenleiter, die andere Verbindungswellenleiter seltener als der Verbindungswellenleiter mit der Höchstzahl von Überquerungen von anderen Verbindungswellenleitern überqueren, jeweils durch mindestens ein optisches Dämpfungselement gedämpft werden.

4. Optische Vorrichtung nach Anspruch 3,
**dadurch gekennzeichnet, dass**
- alle Verbindungswellenleiter, die andere Verbindungswellenleiter seltener als der Verbindungswellenleiter mit der Höchstzahl von Überquerungen überqueren, jeweils durch eine bestimmte Anzahl von optischen Dämpfungselementen gedämpft werden,
- wobei die bestimmte Anzahl der Differenz zwischen der Höchstzahl und der Anzahl von Wellenleiterüberquerungen des jeweiligen Verbindungswellenleiters entspricht.

5. Optische Vorrichtung nach Anspruch 4,
**dadurch gekennzeichnet, dass**
ein optisches Dämpfungselement, das den zweiten Verbindungswellenleiter (42) dämpft, ein Scheinwellenleiter (81) ist, der den zweiten Verbindungswellenleiter unter demselben Winkel überquert, wie der erste Verbindungswellenleiter (41) den dritten Wellenleiter (43) überquert.

6. Optische Vorrichtung nach einem beliebigen der vorhergehenden Ansprüche 4-5,
**dadurch gekennzeichnet, dass**
ein optisches Dämpfungselement, das den dritten Verbindungswellenleiter (43) dämpft, ein Scheinwellenleiter (82) ist, der den dritten Verbindungswellenleiter unter demselben Winkel überquert, wie der erste Verbindungswellenleiter (41) den zweiten Wellenleiter (42) überquert.

7. Optische Vorrichtung nach einem beliebigen der vorhergehenden Ansprüche,
**dadurch gekennzeichnet, dass**
der Koppler (20) zwei Eingänge und vier Ausgänge aufweist, wobei die Ausgänge verlassende Signale Phasendifferenzen untereinander von 90° oder ein Vielfaches davon aufweisen.

8. Optische Vorrichtung nach einem beliebigen der vorhergehenden Ansprüche,
**dadurch gekennzeichnet, dass**
der Koppler ein Mehrmoden-Interferenzkoppler ist.

9. Optische Vorrichtung nach einem beliebigen der vorhergehenden Ansprüche,
**dadurch gekennzeichnet, dass**
- die Vorrichtung weiterhin vier Fotodetektoren (51-54) und zwei Differenzverstärker (61, 62) umfasst, wobei jeder der Verstärker mit zwei Fotodetektoren verbunden ist,
- wobei jeder Fotodetektor mit einem der Ausgänge des Verbindungsnetzes (30) verbunden ist.

## Revendications

1. Dispositif optique (10), comprenant un coupleur (20) possédant des entrées (I1, 12) de coupleur et des sorties (O1-O44) de coupleur et un réseau de raccord (30),
- ledit réseau de raccord (30) comprenant des guides d'ondes de raccordement (41-44) qui raccordent lesdites sorties (O1-O4) de coupleur à des sorties (O1'-O4') du réseau de raccord,
- au moins un guide d'ondes de raccordement du réseau de raccord croisant au moins un autre guide d'ondes de raccordement du réseau de raccord,
- au moins un guide d'ondes de raccordement (42-44), qui croise d'autres guides d'ondes de raccordement moins souvent que le guide d'ondes de raccordement (41) avec le nombre maximal de croisements avec d'autres guides d'ondes de raccordement, étant atténué par un élément d'atténuation optique, lequel élément d'atténuation optique comprend un guide d'ondes fictif (81-84) qui croise ledit au moins un guide d'ondes de raccordement,
**caractérisé en ce que**
- ledit coupleur (20) comprend quatre sorties de coupleur et ledit réseau de raccord (30) comprend quatre guides d'ondes de raccordement, chaque guide d'ondes de raccordement raccordant une des sorties du coupleur à une sortie correspondante du réseau de raccord,
- un premier guide d'ondes de raccordement (41) croisant une fois chacun des deuxième et troisième guides d'ondes de raccordement (42, 43), et un quatrième guide d'ondes de raccordement (44) ne croisant aucun autre guide d'ondes de raccordement,
- le quatrième guide d'ondes de raccordement étant atténué par un premier guide d'ondes fictif (83) et un deuxième guide d'ondes fictif (84), le premier guide d'ondes fictif (83) croisant le quatrième guide d'ondes de raccordement (44) selon le même angle que celui selon lequel le premier guide d'ondes de raccordement (41) croise le deuxième guide d'ondes (42), et le deuxième guide d'ondes fictif (84) croisant le quatrième guide d'ondes de raccordement (44) selon le même angle que celui selon lequel le premier guide d'ondes de raccordement (41) croise le troisième guide d'ondes de raccordement (43), et
- la largeur de guide d'ondes des guides d'ondes fictifs correspondant à la largeur de guide d'ondes des guides d'ondes de raccordement.

2. Dispositif optique selon la revendication 1, **caractérisé en ce que**
lesdits guides d'ondes fictifs possèdent des extrémités non raccordées qui sont séparées des sorties (O1-O4) de coupleur et des sorties (O1'-O4') du réseau de raccord.

3. Dispositif optique selon l'une quelconque des revendications précédentes, **caractérisé en ce que**
tous les guides d'ondes de raccordement, qui croisent d'autres guides d'ondes de raccordement moins souvent que le guide d'ondes de raccordement avec le nombre maximal de croisements avec d'autres guides d'ondes de raccordement, sont chacun atténués par au moins un élément d'atténuation optique.

4. Dispositif optique selon la revendication 3, **caractérisé en ce que**
- tous les guides d'ondes de raccordement, qui croisent d'autres guides d'ondes de raccordement moins souvent que le guide d'ondes de raccordement avec le nombre maximal de croisements, sont chacun atténués par un nombre particulier d'éléments d'atténuation optique,
- ledit nombre particulier correspondant à la différence entre ledit nombre maximal et le nombre de croisements de guides d'ondes du guide d'ondes de raccordement respectif.

5. Dispositif optique selon la revendication 4, **caractérisé en ce que**
un élément d'atténuation optique, qui atténue le deuxième guide d'ondes de raccordement (42), est un guide d'ondes fictif (81) qui croise le deuxième guide d'ondes de raccordement selon le même angle que celui selon lequel le premier guide d'ondes de raccordement (41) croise le troisième guide d'ondes (43).

6. Dispositif optique selon l'une quelconque des revendications 4 et 5, **caractérisé en ce que**
un élément d'atténuation optique, qui atténue le troisième guide d'ondes de raccordement (43), est un guide d'ondes fictif (82) qui croise le troisième guide d'ondes de raccordement selon le même angle que celui selon lequel le premier guide d'ondes de raccordement (41) croise le deuxième guide d'ondes (42).

7. Dispositif optique selon l'une quelconque des revendications précédentes, **caractérisé en ce que**
le coupleur (20) possède deux entrées et quatre sorties, les signaux quittant les sorties présentant des déphasages égaux à 90° ou à des multiples de 90°.

8. Dispositif optique selon l'une quelconque des revendications précédentes, **caractérisé en ce que**
le coupleur est un coupleur à interférences multimodes.

9. Dispositif optique selon l'une quelconque des revendications précédentes, **caractérisé en ce que**
- le dispositif comprend en outre quatre photodétecteurs (51-54) et deux amplificateurs différentiels (61, 62), chacun des amplificateurs étant raccordé à deux photodétecteurs,
- chaque photodétecteur étant raccordé à une des sorties du réseau de raccord (30).
